# EUROPEAN PATENT APPLICATION

(11) **EP 1 681 763 A1**
(43) Date of publication of application: **19.07.2006**
(21) Application number: 04257695.9
(22) Date of filing: 10.12.2004
(51) Int. Cl.: H02P 7/29, H03K 17/18

(54) **Universal device for DC motor speed control**

(71) Applicant: STMicroelectronics Limited, Marlow, Buckinghamshire SL7 1YL (GB); STMICROELECTRONICS SA, 92120 Montrouge (FR)
(72) Inventor: Darzy, Saul, Edgware Middlesex HA8 8HN (GB); Garnier, Jean Francois, 38450 Vif (FR)
(74) Representative: Frost, Alex John

(57) **Abstract**

There is provided a controller for a DC motor drive transistor which controls a parameter of a motor, the transistor being of PNP or NPN type, and the controller comprising a detection circuit, adapted to determine whether the DC motor drive transistor is of the PNP or NPN type and a driver circuit, adapted to sink current from the PNP transistor if it is determined that a PNP transistor is present, or source current into the NPN transistor if it is determined that an NPN transistor is present.

## Description

This invention relates to a controller for a DC motor drive transistor and to a method of controlling a DC motor drive transistor

### Background of the invention

Typically, the speed of a DC motor is controlled by the size of the voltage applied across the DC motor, and in most cases, a bipolar junction transistor (BJT) is used to control this voltage.

When using a BJT to drive a DC motor, either an NPN or PNP type BJT may be used, and depending on which type of BJT is chosen, the motor will either be connected to the positive power supply rail or ground.

A BJT DC motor drive transistor needs a controller to set the speed of the motor, and these come in the form of standard NPN or PNP DC motor driver controllers which come in standard IC packages for each type, but not for both types.

The choice of whether to use an NPN or PNP drive configuration to drive the DC motor can often change during the design of the overall circuit or device. For example, due to DC motor connection changes forced upon the designer by the location of other components.

When such a change is made, the designer must then redesign his circuit to take into account the change of drive BJT.

Such changes take extra time and effort to implement and, therefore, add to production costs and/or delay launch of a product.

Therefore, there is a need to provide a universal DC motor controller, i.e. capable of driving in both PNP and NPN configurations, and which comes in a single standard package, to thereby obviate the need to redesign circuits when the choice of which BJT drive transistor to use is changed.

### Summary of the invention

Against this background, the present invention in one aspect provides a controller for a DC Motor drive transistor as defined in claim 1.

Thus the invention provides a controller that can detect the type of drive transistor being used and sink current from or source current into the drive transistor as required.

The advantage of such a universal controller is that the circuit designer can use a single device in his design, regardless of what type of drive transistor is used with the DC motor. There is no requirement to redesign or replace the DC motor drive controller for one of the other type, if the DC motor drive configuration is changed for any reason. This saves the time and money that would otherwise be spent on the redesign.

Preferably, the detection circuit comprises a comparator which is used to compare a test input voltage derived from the motor drive circuit, and is dependent upon the type of DC motor drive transistor being used, with a reference voltage. The output of the comparator is indicative of the type of drive transistor in use.

Preferably, the controller also includes a latchable selection means, for selecting the appropriate input reference voltage for the driver circuit, which is latched for the period the whole controller is switched on.

In another aspect, there is provided a method of controlling a DC motor drive transistor as defined in claim 14.

The advantage of such a method is that there is no need to change the controlling circuitry if the drive configuration used to drive the DC motor is changed from being NPN type to being PNP type. This results in less work being required when such a change being made, for example, because of the specific circuit board routing available in the circuit design.

Whilst embodiments are described in terms of active high logic, the skilled man would realise that active low logic implementations are equally possible.

### Brief Description of the Drawings

The present invention may be put into practice in a number of different ways. An embodiment will now be described by way of example only, and with reference to the accompanying drawings, in which:
Figure 1 shows a schematic diagram of how the universal controller of the present invention is connected to either a NPN or PNP configuration driven DC motor.
Figure 2 shows a more detailed schematic of the component parts of the universal controller of the present invention.
Figure 3 shows a timing diagram of the different control signals found within and around the universal controller of the present invention, and how they interact to correctly control the DC motor.

### Detailed description

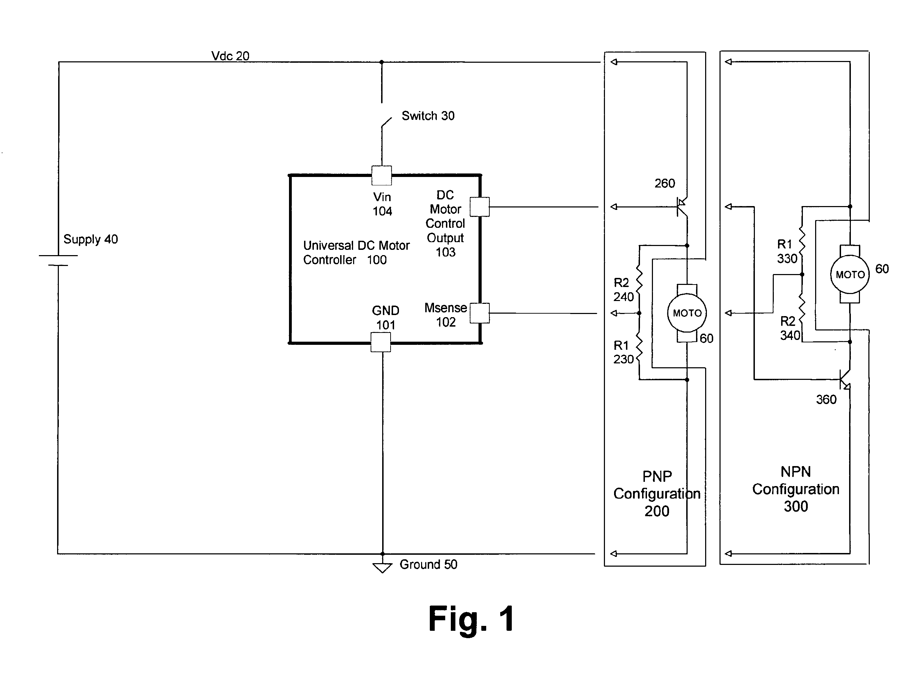

Figure 1 shows the inputs and outputs of the universal DC motor controller 100 of the present invention, and how this controller 100 is connected to the positive power supply 20, ground 50 and the DC motor 60, which can be in either PNP drive configuration 200, or NPN drive configuration 300.

The controller 100, and the DC motor 60 are connected across a DC power supply 40, which can either be an AC mains driven DC power supply or a battery. The DC power supply 40 sets up the required positive power supply rail 20 and ground voltage 50.

The controller has 3 inputs, GND 101, which is connected to the ground supply rail 50, Vin 104, which is connected to the positive power supply rail 20 via a switch 30, and Msense 102, which is connected to the midpoint between two resistors in series, connected across the DC motor 60. Msense receives an input voltage used to determine which drive configuration, either PNP or NPN, the DC motor 60 is being driven in. The controller 100 also has a DC motor control output 103, for controlling the drive transistor 260/360 being used to drive the DC motor 60.

The controller 100 is activated by using a switch 30 to connect the Vin input 104 to the positive power rail 20.

In the PNP drive configuration 200 of the DC motor 60, the emitter (e) of the PNP transistor 260 is connected to the positive supply rail 20, the base (b) of the PNP transistor 260 is connected to the DC motor control output 103 of the universal speed controller 100, and the collector (c) of the PNP transistor 260 is connected to one input terminal of the DC motor 60, and one input terminal of a speed limiting resistor (R2) 240, forming a voltage divider network across the DC motor 60.

The voltage divider network consists of two resistors, R1 230/330 and R2 240/340, connected in series across the two inputs of the DC motor 60. In the PNP configuration 200, resistor R2 is connected to the positive power rail side of the DC motor 60, while R1 is connected to the ground side of the DC motor 60. In the NPN configuration 300, the two resistors R1 and R2 are swapped round.

The Msense input 102 to the controller 100, is derived from the midpoint of the voltage divider network described above, i.e. where the two resistors R1 and R2 meet.

This voltage divider network is present because the voltage at Msense 102 is compared to one or other of the outputs (Vref or Vin-Vref) from a bandgap voltage reference circuit, both of which are less than the voltage being used to drive the DC motor 60. This is to say, the voltage divider provides a scaled down version of the voltage across the DC motor 60, suitable for comparison to the reference voltages Vref or Vin-Vref provided.

Furthermore, the voltage divider also has the benefit of allowing a top speed of the motor 60 to be set. This is because the middle point of the voltage divider network is compared (i.e. regulated with respect) to the internal Vref or Vin-Vref, depending on which configuration is in use. For example, using the circuit described in the PNP drive configuration 200, the maximum voltage across the DC motor is equal to (Vref *(1+ (R2/R1)). Equally, in the NPN configuration 300, the voltage across the DC motor is the same. In both cases, the top speed is determined by the ratio of R2 to R1.

In the NPN configuration 300, the emitter (e) of the NPN transistor 360 is instead connected to the ground rail of the power supply 50, and the collector (c) of the NPN transistor 360 is instead connected to the DC motor 60 and speed limiting resistor (R2) 340.

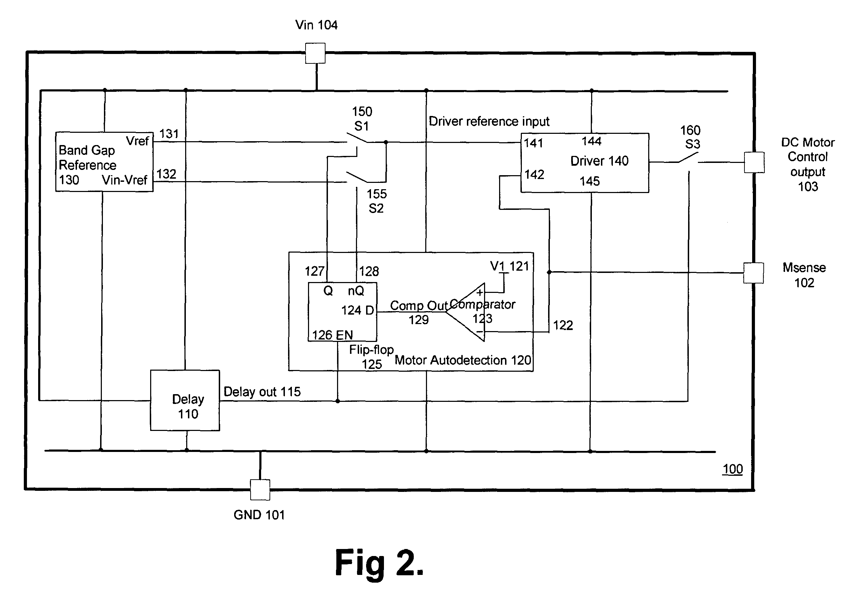

Figure 2 shows the block diagram of the component parts of the universal DC motor controller 100. The controller 100 comprises seven major components: A delay circuit 110; a motor auto-detection circuit 120; a band gap voltage reference 130; a driver circuit 140; and three internal switches S1 150, S2 155, and S3 160.

When the external switch 30 is closed, Vin 104 is immediately raised to the operating voltage supplied by the power supply 40, therefore the circuits within the controller 100 are powered up. Typically, Vin is between 1.8 and 5 Volts.

In overview, the circuit is powered up, enters a forced delay period during which the correct configuration of driver is selected, then after the delay is finished, the correct drive signal is applied to the drive transistor.

The Delay circuit 110 is a simple RC circuit with two invertors, which has Vin 104 as its input, and Delay out 115 as its output. The delay circuit 110 simply provides a delayed version of the switching of Vin to the motor auto-detection circuit 120 to latch its output, and to switch S3 160 to connect the driver circuit 140 to the drive transistor. Delay out 115 latches the flip-flop 125 by taking the flip-flop enable signal 126 high. The delay circuit 110 can equally be any other known configuration of delay available, for example, a simple de-bounce circuit. The delay is present to provide a short time period for detecting the drive configuration being used and to set up the driver circuit 140 appropriately.

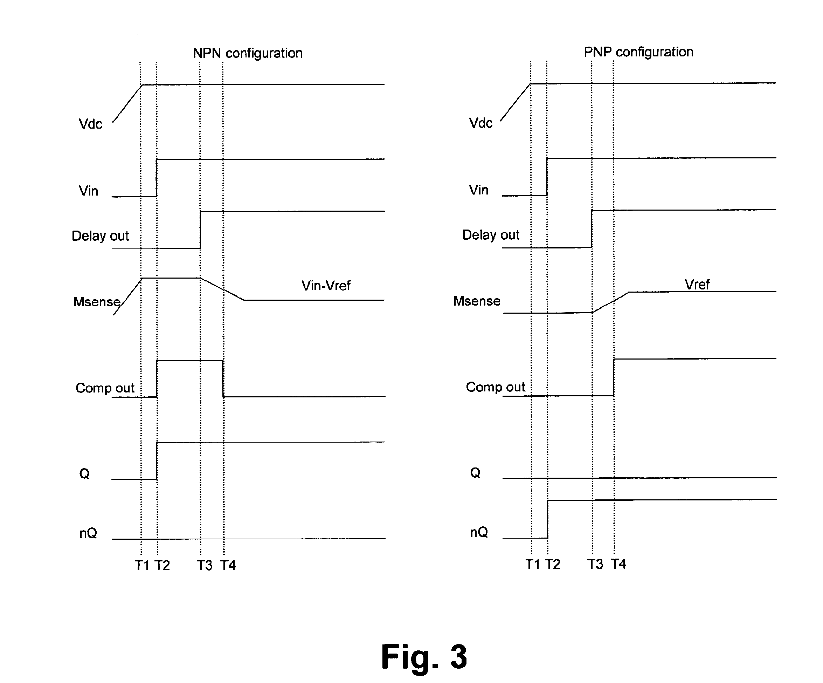

The delay can be of any length, but is typically set to be just sufficient to ensure the detection step completes accurately. The action of the delay can be seen most clearly from the timing diagrams of Figure 3.

The bandgap voltage reference circuit 130 may be any typical band gap voltage reference circuit that produces two reference voltages, one with respect to ground, i.e. (Vref) 131, and another with respect to Vin, i.e. (Vin-Vref) 132. In the specific embodiment, Vref is 1.2 volts, Vin is any where from 1.8v to 5v.

The driver circuit 140 can consist of any known type of rail-to-rail operational amplifier, so long as it is capable of sinking and sourcing current according to the polarity of its differential input voltage. The driver circuit 140 is designed such that, if the Msense input 142 to the driver circuit 140 is at a lower voltage than Vref (i.e. below 1.2V), then the driver circuit 140 will sink current from the base (b) of the PNP transistor 260. The driver circuit 140 is also designed such that, alternatively, if the Msense input 142 to the driver circuit 140 is at a higher voltage than Vin-Vref (i.e. above between 0.6 and 3.8V, dependent on Vin), the driver circuit 140 will source current into the base (b) of the NPN transistor 360. The current flow into the DC motor 60 will be regulated to have the correct value such that the DC motor 60 is driven at a constant speed. This speed is controlled by the voltage across the DC motor 60, which is equal to (Vref*(1+(R2/R1) in both the PNP and the NPN configuration.

The motor auto-detection block 120 consists of a comparator 123 and a flip-flop 125. The comparator 123, has two voltage inputs, a positive input 121 which is connected to a fixed reference voltage, V1, and a negative input 122, which is directly connected to the Msense input 102 of the controller 100. The comparator output 129 is connected to the data input (D) 124 of the flip-flop. The flip-flop also has an enable input (EN) 126, a first data output (Q) 127, and second data output (nQ) 128, which is the logical NOT of the first data output 127.

When the motor auto-detection circuit 120 is powered up, the comparator compares the voltage level at Msense with an internal reference V1. V1 is set such that when the DC motor 60 is being driven in its NPN configuration 300, V1 is less than the voltage at Msense, and when the DC motor 60 is being driven in its PNP configuration 200, V1 is greater than the voltage at Msense. Typically, V1 would be equal to approximately Vin/2 .

In the NPN configuration 300, the Msense voltage 320 is at or near the power supply rail 20 voltage level when the NPN transistor 360 is off, i.e. when the DC motor 60 is off. Therefore, the voltage at the inverting input 122 of the comparator 123 is greater than the voltage at the non-inverting input 121 of the comparator 123.

Accordingly, the output 129 of the comparator 123 is driven low. This low input is fed into the data input (D) 124 of the flip-flop. The flip-flop 125 is eventually enabled by the low signal along Delay out 115, the first data output (Q) 127 is set low and the second data output (nQ) 128 is set high. Therefore, S1 150 is left open, and S2 155 is closed. In this case, the input of the driver circuit 141 is set to use Vin-Vref as its reference voltage. When the Delay Out signal goes high the flip-flop latches the set value for Q. As mentioned previously, in this state, the driver circuit will source current into the NPN transistor, since the voltage at the Msense input 142 of the driver circuit 140 is greater than the voltage at the reference input 141. The Msense voltage is controlled to get closer to (Vin - Vref), but the flip-flop output would not change even if Msense became higher than V1 because the Delay Out is high.

In the PNP configuration 200, the Msense voltage is close to ground 50 when the DC motor 60 is off, therefore the comparator output 129 will be high and hence the first data output (Q) 127 is set high and the second data output (nQ) 128 is set low when the flip-flop is enabled. In this state, S1 150 is closed, and S2 155 is open, therefore the reference voltage 141 used by the driver 140 is Vref.

The three switches S1 to S3 may be any type of electrically controlled switches, for example transistors, or other equivalent semiconductor switches. Alternatively, S3 can also be a driver circuit enable signal instead.

Figure 3 shows the timing diagrams for various signals associated with the operation of the controller in both NPN and PNP configurations. On these diagrams, the following happens at each indicated time, or time period:

**0-T1** :- Connecting power supply 40, or putting in the battery, therefore Vdc is ramping up.

**At T2: -** Turning on the external switch 30 to start the controller 100, and DC motor 60.

**T2-T3:** - Delay to allow Comparator output 129 and Q 127 reach their detected values.

**At T3:** - Delay output 115 goes high to keep the latch (Q) level and to turn on S3 160.

**T3-T4:** - DC Motor 60 speed increases.

**> T4** : - DC Motor 60 is running at constant speed.

## Claims

1. A controller for a DC motor drive transistor which controls a parameter of a motor, the transistor being of PNP or NPN type, the controller comprising:
a detection circuit, adapted to determine whether the DC motor drive transistor is of the PNP or NPN type; and
a driver circuit, adapted to sink current from the PNP transistor if it is determined that a PNP transistor is present, or source current into the NPN transistor if it is determined that an NPN transistor is present.

2. The controller of claim 1, wherein the DC motor drive transistor further comprises a collector, and the detection circuit further comprises a comparator, adapted to provide an output based on a comparison of a first reference voltage with a voltage derived from the transistor collector.

3. The controller of claim 2, wherein the detection circuit further comprises selection logic, adapted to provide first and second selection outputs, the outputs being logically opposite in value to one another, and derived from the output of the comparator.

4. The controller of claim 3, wherein the driver circuit further includes a reference voltage input, the controller further comprising:
a voltage reference means, adapted to provide second and third reference voltages;
a first switching means, adapted to connect the second reference voltage to the reference voltage input of said driver circuit upon activation by the first selection output;
a second switching means adapted to connect the third reference voltage to the reference voltage input of said driver circuit upon activation by the second selection output.

5. The controller of claim 4, wherein the DC motor drive transistor further includes a base terminal, and wherein the driver circuit further includes an output, for connection to the base terminal of the DC motor drive transistor, the controller further comprising a third switching means, adapted to connect the output of the driver circuit to the base terminal of the DC motor drive transistor, dependent upon an input voltage to the third switching means.

6. The controller of claim 5, wherein the controller is activated by a turn on voltage, and wherein the controller further comprises a delay circuit, adapted to provide, as an output, a delayed version of the turn on voltage to the third switching means.

7. The controller of claim 6, wherein the selection logic further comprises a latching input, operably connected to the output of said delay circuit, wherein the output of the selection logic is latched dependent upon the output of the delay circuit.

8. The controller of any of claims 3 to 7, wherein the selection logic is a flip-flop.

9. The controller of any preceding claim, wherein the driver circuit is a rail-to-rail operational amplifier.

10. The controller of any of claims 4 to 9, wherein the voltage reference means is a two voltage output band gap voltage circuit.

11. The controller of any preceding claim, wherein the delay circuit is an RC delay circuit.

12. The controller of claim 11, wherein the RC delay circuit is a debounce circuit.

13. The controller of claim 5, wherein the third switching means is a driver circuit enable signal.

14. A method of controlling a DC motor drive transistor which controls a parameter of a motor, the transistor being of either PNP or NPN type, the method comprising:
detecting whether the DC motor drive transistor is of the PNP or NPN type; and
configuring a driver circuit to sink current from the PNP transistor if it is determined that a PNP transistor is present, or source current into the NPN transistor if it is determined that an NPN transistor is present.

15. The method of claim 14, wherein the step of configuring the driver further includes comparing an input voltage derived from a collector of the transistor, to a first reference voltage.

16. The method of claim 15, wherein the step of configuring the driver further comprises selecting one of a second or third reference voltage as a reference input to the driver circuit, dependent upon the comparison between the input voltage derived from the transistor collector and a first reference voltage.

17. The method of claim 16, further comprising latching the selection of the second or third reference voltage after a predetermined delay time period.

18. The method of claim 17, further comprising the step of connecting the driver circuit to the DC motor drive transistor after the predetermined delay period.
